# EUROPÄISCHE PATENTSCHRIFT

(11) **EP 1 076 856 B1**
(45) Veröffentlichungstag und Bekanntmachung des Hinweises auf die Patenterteilung: **02.07.2003**
(21) Anmeldenummer: 99927693.4
(22) Anmeldetag: 20.04.1999
(51) Int. Cl.: G06F 12/08

(54) **CACHE-SPEICHER FÜR ZWEIDIMENSIONALE DATENFELDER**
CACHE MEMORY FOR TWO-DIMENSIONAL DATA FIELDS
ANTEMEMOIRE POUR ZONES DE DONNEES BIDIMENSIONNELLES

(30) Priorität: 07.05.1998 DE 19820457
(43) Veröffentlichungstag der Anmeldung: 21.02.2001
(73) Patentinhaber: Infineon Technologies AG, 81669 München (DE)
(72) Erfinder: HACHMANN, Ulrich, D-81677 München (DE)
(74) Vertreter: Viering, Jentschura & Partner
(86) Internationale Anmeldenummer: DE9901190
(87) Internationale Veröffentlichungsnummer: WO99059069

(56) Entgegenhaltungen:
- US-A- 5 428 725
- US-A- 5 602 984
- US-A- 5 642 494
- US-A- 5 742 831

## Beschreibung

Die Erfindung betrifft einen Cache-Speicher, der bei einer Verarbeitungseinheit eine höhere Taktfrequenz erlaubt als die maximal zulässige Taktfrequenz aufgrund der Eigenschaften von externen Speicherbausteinen und der Leiterplatte. Cache-Speicher in herkömmlichen Prozessorstrukturen, wie beispielsweise im Motorola MC68040 erlauben in der Regel nur den Zugriff auf ein einzelnes Datenwort pro Takt. Bei der zweidimensionalen Datenfeldern, wie z. B. Bildern, bedeutet dies, daß zum Auslesen eines Bildbereiches aus dem Cache-Speicher mehrere Takte notwendig sind, wenn in einem Datenwort die benötigten Pixel nicht zufällig nebeneinander liegen, und zwar auch dann, wenn alle Daten schon im Cache vorhanden sind.

Aus dem Artikel von Kamp W. et.al.: "Programmable 2D Linear Filter for Video Applications" in IEEE J. of Solid State Circuits, Vol. 25, No. 3, pp. 735-740 (1990) sind on-chip-Speicher mit mehreren Zeilenpuffern, die komplette Bildzeilen speichern, bekannt, wobei übereinanderliegende Pixel aus übereinander angeordneten Zeilenpuffern ausgelesen werden und ausgelesene Pixel in den nächsten Zeilenpuffer transferiert werden, damit sie sich beim nächsten Zugriff, welcher dann um eine Zeile versetzt stattfindet, an der richtigen Position befinden. Dies hat jedoch die Nachteile, daß die Bildbreite durch die Puffergröße begrenzt, die Art des Auslesens festgelegt und ein spaltenorientiertes Verarbeiten der Bilddaten nicht ohne Nachladen möglich ist.

In dem US-Patent US 5 602 984 wird ein Cache-Speicher offenbart, welcher Daten aus einer Quelle speichert. Jeder Datenabschnitt wird durch eine Adresse mit einer Mehrzahl an Bits identifiziert, welche in vier Gruppen aufgeteilt sind. Ein Multiplexer antwortet auf ein Steuersignal, indem er selektiv zwei der Bit-Gruppen an Adresseingänge eines Schlüsselspeichers (tag memory) und eines Schreib-Lese-Speichers (RAM = random access memory) anlegt und indem er selektiv die anderen zwei Bit-Gruppen an einen Adresseingang des Schlüsselspeichers anlegt. Der Multiplexer ermöglicht unterschiedlichen Gruppen von Adress-Bits die zwei Speicher zu adressieren. Ein Komparator vergleicht einen von den anderen zwei Gruppen von Adress-Bits gebildeten ersten Bit-Satz mit einem aus dem Schlüsselspeicher ausgelesenen zweiten Bit-Satz. Eine Speichersteuerung ermöglicht ein Auslesen von Daten aus dem Schreib-Lese-Speicher, wenn der erste Bit-Satz mit dem zweiten Bit-Satz übereinstimmt. Wenn der erste Bit-Satz mit dem zweiten Bit-Satz nicht übereinstimmt, ermöglicht die Speichersteuerung ein Auslesen der Daten aus der Quelle und ein Speichern der Daten in dem Schreib-Lese-Speicher. Im letzten Fall speichert der Schlüsselspeicher die an seinem Dateneingang vorliegenden Bits.

Aus dem US-Patent US 5 742 831 ist eine Vorrichtung zum Pflegen der Cache-Kohärenz für anstehende Ladeoperationen bekannt. Ein Prozessor blockiert selektiv nur, wenn ein bestimmtes Verhältnis zwischen der Adresse einer eingehenden Speicheransweisung und den Adressen von anstehenden Ladeanweisungen existiert. Die durch eine eingehende Speicheranweisung spezifizierte Adresse wird mit allen durch die anstehenden Ladeanweisungen, welche in einer Bus-Warteschlange gespeichert sind, spezifizierten Adressen verglichen. Der Prozessor blockiert das Ausgeben nachfolgender Anweisungen und das Ausführen der Speicheranweisung, wenn der Vergleich eine Übereinstimmung der Speicheranweisungsadresse mit einer beliebigen der Adressen der anstehenden Ladeanweisungen ergibt. Anweisungsausgabe und Ausführung der Speicheranweisung werden freigeschaltet, wenn Daten von der übereinstimmenden Ladeanweisungsadresse zurückgegeben werden.

Die der Erfindung zugrundeliegende Aufgabe besteht nun darin, einen Cache-Speicher anzugeben, der die obengenannten Nachteile vermeidet.

Diese Aufgabe wird erfindungsgemäß durch die Merkmale des Patentanspruchs 1 gelöst. Die weiteren Ansprüche betreffen bevorzugte Ausgestaltungen des Cache-Speichers.

Im folgenden wird ein Ausführungsbeispiel der Erfindung anhand der Zeichnungen näher erläutert. Dabei zeigt
- Figur 1: ein Blockschaltbild des gesamten Ausführungsbeispiels,
- Figur 2: ein Detailschaltbild des Speicherfeldes von Figur 1,
- Figur 3: eine Darstellung zur Erläuterung des Bildablageformats im externen Bildspeicher,
- Figur 4: eine Darstellung zur Erläuterung der Funktion der Zuordnungseinheit von Figur 1,
- Figur 5: eine Darstellung zur Erläuterung der Pipelineverarbeitung der Cache-Zugriffe,
- Figur 6: eine Darstellung zur Erläuterung der Datenkonflikterkennungseinheit und
- Figur 7: ein Schaltbild einer vorteilhaften Datenkonflikterkennungseinheit.

Durch die spezielle Ausgestaltung des Speicherfeldes und der Zuordnungseinheit können aus dem Speicherfeld pro Takt z.B. mehrere Pixel gleichzeitig ausgelesen und in einem Prozessorfeld parallel verarbeitet werden. Das Format der ausgelesenen Bildfenster kann dabei von Takt zu Takt wechseln und z.B. Bildbereiche aus zwei Zeilensegmenten mit 8 Pixeln bis zu Bildbereichen aus zwei Spaltenelementen mit 8 Pixeln aufweisen. Es sind also keine Puffer zur Aufnahme einer oder mehrerer ganzer Bildzeilen erforderlich. Durch eine Schreibwarteschlange, eine Lesewarteschlange und eine Datenkonflikterkennungseinheit werden Datenkonflikte beim Lesen und Beschreiben des Speicherfeldes verhindert. Die zeitintensiven Nachladeoperationen beeinträchtigen hier nicht den Datendurchsatz, da durch die Pipelineverarbeitung der Zugriffsanforderungen zwar die Latenzzeit für die einzelnen Zugriffe nicht vermindert wird, jedoch der Durchsatz bei genügender Lokalität der Daten, das heißt hier z. B. einer der oben genannten Bildbreiche, nur wenige Zugriffe pro Bildbereich erfordert und so der Datentransferdurchsatz zum externen Speicher reduziert wird.

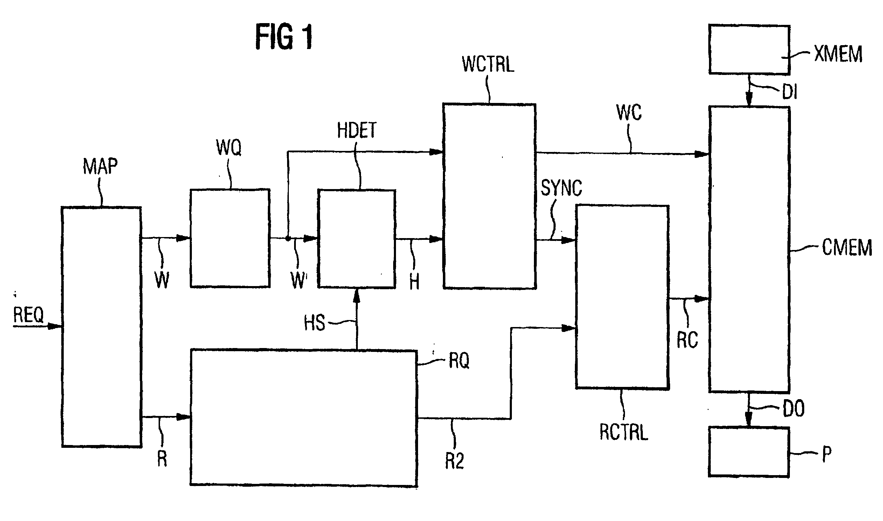

In Figur 1 ist ein Cache-Speicher zwischen einem externen Speicher XMEM und einer Verarbeitungseinheit P vereinfacht dargestellt, wobei die Verarbeitungseinheit in der Regel aus einem Prozessorfeld besteht. Der Cache-Speicher weist im wesentlichen ein Speicherfeld CMEM sowie eine Cache-Steuerung auf, die aus einem Anforderungssignal REQ Schreibsteuersignale WC und Lesesteuersignale RC für das Speicherfeld CMEM und in entsprechender Weise auch für den externen Speicher und die Verarbeitungseinheit P bildet, wobei Eingangsdaten DI aus dem externen Speicher XMEM in das Speicherfeld eingelesen werden und Ausgangsdaten DO aus dem Speicherfeld in die Verarbeitungseinheit eingelesen werden. Die Cache-Steuerung weist im wesentlichen eine Zuordnungseinheit (Mapper) MAP, eine Schreibwarteschlange WQ, eine Lesewarteschlange RQ, eine Datenkonflikterkennungseinheit (hazard detection unit) HDET, eine Schreibsteuerung WCTRL und eine Lesesteuerung RCTRL auf. Die Zuordnungseinheit MAP bildet Bereiche innerhalb eines zweidimensionalen Datenfeldes, z.B. eines Bildes, mit Hilfe von Beschreibungsdatensätzen SectionEntry auf Datenblöcke des Cache-Speichers flexibel ab und erzeugt so aus dem Anforderungssignal REQ Schreibkommandos W, die der Schreibwarteschlange WQ zugeführt werden, und Lesekommandos R, die der Lesewarteschlange RQ zugeführt werden. Am Ausgang der Schreibwarteschlange WQ stehen verzögerte Schreibkommandos W' an, die sowohl der Schreibsteuerung WCTRL als auch der Datenkonflikterkennungseinheit HDET zugeführt werden. Die Datenkonflikterkennungseinheit HDET bildet dabei in Abhängigkeit der verzögerten Schreibkommandos W' und in Abhängigkeit von Adressen HS aller noch zu lesenden Cache-Speicherzellen, die vor einem Cache-Miss, also einer Leseanfrage deren zugehörige Daten noch nicht bereits Speicherfeld CMEM geladen sind, angefordert wurden, ein Konfliktmeldesignal H, das die Schreibsteuerung WCTRL im Konfliktfall an der Abgabe von Schreibsteuersignalen WC hindert. Datenkonflikterkennungseinheit HDET verhindert, daß Schreibanforderungen gestartet werden, bevor alle Treffer, also die Anfragen deren zugehörige Daten im Speicher CMEM bereits geladen sind, in der Lesewarteschlage RQ verarbeitet sind. Die Lesesteuerung RCTRL erhält ein Synchronisiersignal SYNC von der Schreibsteuerung WCTRL und von der Lesewarteschlange RQ verzögerte Schreibkommandos R2 und bildet am Ausgang das Lesesignal RC. Das Synchronisiersignal SYNC sorgt dafür, daß zu einer Anfrage ein zugehöriges Lesesteuersignal RC erst dann erzeugt wird, wenn die benötigten Daten bereits vom externen Speicher XMEM in den Cache-Speicher CMEM übertragen wurden.

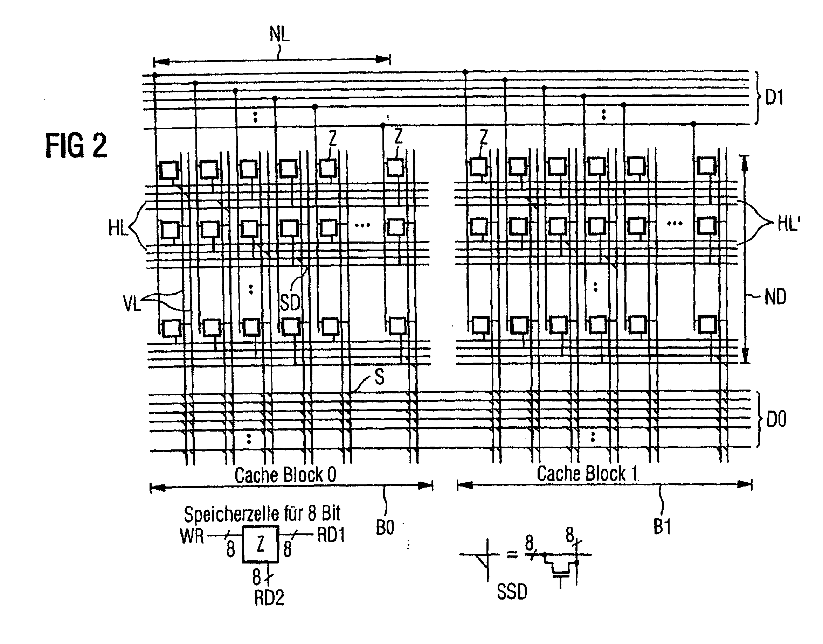

In Figur 2 ist beispielhaft ein Speicherfeld CMEM mit den zugehörigen Datenpfaden dargestellt. Das Speicherfeld CMEM enthält Speicherzellen Z mit jeweils 8 Bits, die zwei getrennte Leseports RD1 und RD2 zum Auslesen und einen Schreibport WR zum Beschreiben der Zelle Z aufweisen. Ein Leseport versorgt vertikale Leseleitungen VL und der andere Leseport horizontale Leseleitungen HL bzw. HL'. Die vertikalen Leseleitungen sind über einen Kreuzschienenverteiler (Crossbar-Switch) den Ausgängen für die Ausgangsdaten DO frei zuordenbar. Das Speicherfeld ist in zwei getrennte Blöcke BO und Bl aufgeteilt, wobei die horizontalen Leseleitungen HL im Block BO von den horizontalen Leseleitungen HL' im Block B1 getrennt sind. In jedem Block sind diagonal verteilte Schalter zwischen den vertikalen Leseleitungen VL und den horizontalen Leseleitungen HL bzw. HL' derart vorgesehen, daß die horizontalen Leseleitungen über die vertikalen Leseleitungen mit dem Kreuzschienenverteiler verbindbar sind, der über eine Vielzahl von Schaltern S verfügt. Dies ermöglicht hier das parallele Auslesen von mehreren Pixeln einer Bildzeile oder einer Zweizeilenmatrix über die vertikalen Leseleitungen aber auch das Auslesen von Spaltensegmenten oder Matrizen mit zwei Spalten über die horizontalen und vertikalen Leseleitungen.

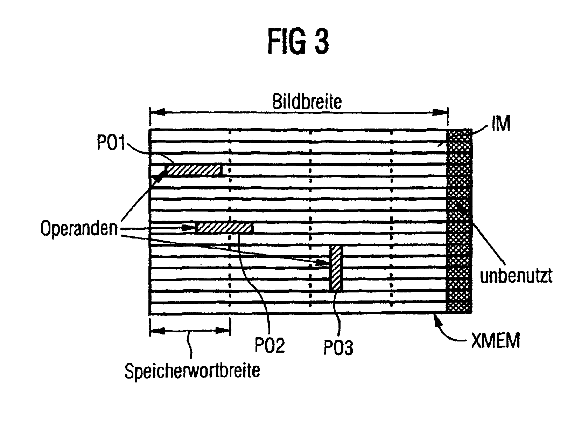

Durch Figur 3 wird deutlich, wie beispielsweise ein Bild im externen Speicher XMEM abgelegt ist. Die ersten 32 Byte der ersten Zeile eines Bildes liegen z. B. im ersten Datenwort das durch eine Bildbasisadresse adressiert wird. Ein Datenwort, das durch die nächsthöhere Adresse bestimmt wird, erhält die in der Bildzeile rechts anschließenden 32 Byte usw. Am Zeilenende wird an den Anfang der nächsten Zeile gesprungen. Wenn die Zeilenlänge ungleich einem Vielfachen von 32 Bytes ist, wird die Zeile mit unbenutzten Bytes bis zu einem Vielfachen von 32 Bytes aufgefüllt, so daß jede Bildzeile im externen Speicher an einer 32-Byte-Wortgrenze beginnt. Damit wird das Bild in vertikale Streifen von 32 Byte Breite unterteilt. Figur 3 zeigt einige mögliche Verarbeitungsoperanden PO1 ... PO3, wobei der Verarbeitungsoperand PO1 vollständig in einem Speicherwort, der Verarbeitungsoperand PO2 auf zwei Speicherwörter verteilt oder aber bei spaltenförmiger Anordnung der Verarbeitungsoperator PO3 in mehreren Speicherworten enthalten ist. Das oben erwähnte Speicherfeld mit zwei getrennten Blöcken B0 und B1 ist gerade für den Verarbeitungsoperanden PO2 von besonderem Vorteil. Für den Verarbeitungsoperanden PO3 wäre ohne den Cache-Speicher die Anzahl der Zugriffe gleich der Anzahl der benötigten Pixel, wobei die Speicher-Busbreite nur minimal genutzt würde.

Die Anforderung REQ enthält eine Position, zum Beispiel die x, y-Koordinaten, ein Format, zum Beispiel Zeile, Spalte oder Matrix, und eine Bildnummer eines angeforderten Bildbereichs. Die Zuordnungseinheit MAP (Mapper) überprüft, ob alle angeforderten Pixel schon im Cache-Speicherfeld gespeichert sind und berechnet die physikalischen Adressen für den externen Speicher XMEM und das Cache-Speicherfeld CMEM. Die Zuordnung von Bildzeilen und Cache-Zeilen erfolgt hier beispielsweise einfach-assoziativ bzw. direct-mapped, das heißt, daß die niederwertigsten Bit der Bildzeilennummer mit der Adresse der zugehörigen Cache-Zeile identisch sind.

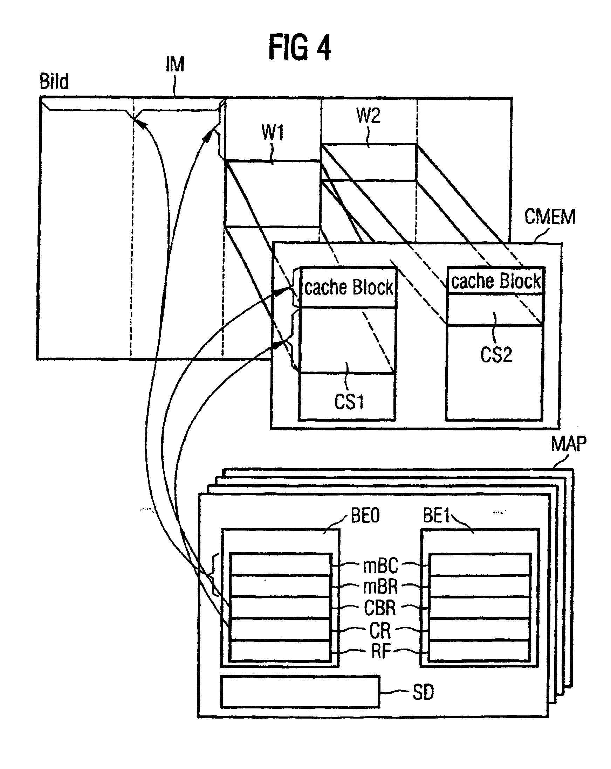

Die in Figur 4 beispielhaft angegebene Zuordnungseinheit MAP weist voneinander getrennte Datenbereiche, sogenannte Bereichseinträge (section entries) auf, die über einen Beschreibungsteil SD (section description) verfügen, der die Merkmale des Bildes enthält und über die Anforderung REQ initialisierbar ist. Darüber hinaus enthält ein jeweiliger Bereichseintrag zwei Blockeinträge BEO und BE1 für zwei Cache-Speicherblöcke CS1 und CS2 im Cache-Speicherfeld CMEM. Ein solcher Blockeintrag enthält eine Startspalte mBC und eine Startreihe mBR eines Bildfensters W1 im Gesamtbild IM, eine Startreihe CBR im Cache-Block und die Anzahl CR der Zeilen des jeweiligen Cache-Bereiches sowie eine Merkzelle RF (resident flag) die angibt, ob der Cache-Block überhaupt gültige Zeilen enthält. Damit mehrere Prozessoren der Verarbeitungseinheit P gleichzeitig den Cache-Speicher benutzen können, werden gegebenenfalls mehrere solche Bereichseinträge vorgesehen. Hiermit ist es möglich, mehrere Bildobjekte gleichzeitig im Cache-Speicher zu verwalten.

Wenn externe Speicherbausteine verwendet werden, die sich nur mit Zwei-Wort-Bursts effizient auslesen lassen oder bei Anwendungen, bei denen eine große Fensterweite nützlich ist, können in einem Cache-Block auch mehrere Cache-Blockbereiche mehreren Bildstreifen zugeordnet werden, wobei beispielsweise alle ungeradzahligen Bildstreifen einem Cache-Blockbereich CS1 und alle geradzahligen Bildstreifen einem Cache-Blockbereich CS2 zugeordnet werden.

Für den Fall, daß ein angeforderter und gespeicherter Bereich keinen Überlapp aufweist, wird ein Schreibkommando für den kompletten angeforderten Bereich in die Schreibwarteschlange WQ und ein Lesekommando in die Lesewarteschlange RQ übergeben. Daten die zuvor im betroffenen Cache-Block gespeichert waren, werden für die nachfolgenden Anforderungen ungültig.

In der Zuordnungseinheit wird hierbei kein Wartezustand (wait state) erzeugt.

Falls zwischen dem angeforderten und gespeicherten Bereich ein Überlapp besteht, werden ein oder zwei Schreibkommandos mit dem noch nicht gespeicherten Bildbereich in die Schreibwarteschlange WQ und ein Lesekommando in die Lesewarteschlange RQ übergeben. Soweit beim Nachladen keine bisher gültigen Zeilen überschrieben werden, bleiben die im betroffenen Cache-Block enthaltenen Daten gültig und werden für die Anforderung benutzt. Zwei Schreibkommandos sind notwendig, wenn von dem angeforderten Bildbereich oben und unten Bildzeilen fehlen. In diesem Fall generiert die Zuordnungseinheit einen Wartezustand, sonst nicht.

Für den letzten Fall, daß der angeforderte Bereich komplett im gespeicherten Bereich enthalten ist, ist kein Schreibkommando notwendig. Das Lesekommando wird in die Lesewarteschlange RQ übergeben. Die Daten im betroffenen Cache-Block bleiben gültig und werden benutzt.

Ein Schreibkommando startet, nachdem es die Schreibwarteschlange WQ durchlaufen hat, das Nachladen eines Bildbereiches aus dem externen Speicher in das Cache-Speicherfeld CMEM. Der mit einem Kommando angeforderte Bildbereich umfaßt einen Ausschnitt mit einer oder zweier Bildspalten und einer oder mehreren Zeilen.

Ein Lesekommando bewirkt, nachdem benötigte Daten in den Cache nachgeladen wurden und eine Freigabe von der nachgeschalteten Verarbeitungseinheit P erfolgt ist, die Ausgabe der angeforderten Daten DO im passenden Format.

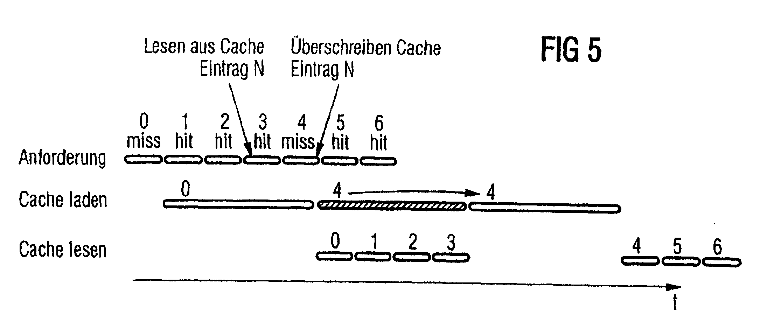

Eine Schwierigkeit ergibt sich beim Nachladen des Cache-Speichers durch ein Pipelining bzw. durch die Warteschlangen WQ und RQ. Nach Abarbeitung von mehreren Zugriffen ergibt sich zwangsläufig, daß alle Cache-Einträge mit Daten be schrieben wurden und für neue Zugriffe alte Daten überschrieben werden müssen. Hierbei ist sicherzustellen, daß keine Daten überschrieben werden, die benötigt werden, um noch in der Pipeline befindliche Aktionen zu bedienen. In Figur 5 wird verdeutlicht, daß dies ohne eine geeignete Steuerung zu einem Datenverlust führen könnte. Wird beispielsweise die Anforderung 3 von der Cache-Steuerung als Treffer (Hit) erkannt und in eine Warteschlange eingegliedert, da die benötigten Daten im Cache-Eintrag N vorhanden sind. Der nächste Zugriff 4 erfordert ein Nachladen von Daten, die - beispielsweise bedingt durch die Leseadresse - ungünstigerweise die Daten in Eintrag N überschreiben. Da nach Anforderung des Zugriffs 4 das Ladeport frei wäre, könnte gleich mit dem Nachladen 4' begonnen werden. Die Daten im Eintrag N werden jedoch noch gebraucht, um Zugriff 3 zu bedienen. Das Nachladen für Zugriff 4 muß auf einen späteren Zeitpunkt 4'' verschoben werden, da die Kommandos 0 ... 3 vorher noch aus der Warteschlange ausgelesen werden müssen. Nach der Latenzzeit der Warteschlange kann auch zum Zeitpunkt 4''' das Kommando 4 aus der Warteschlange ausgelesen werden.

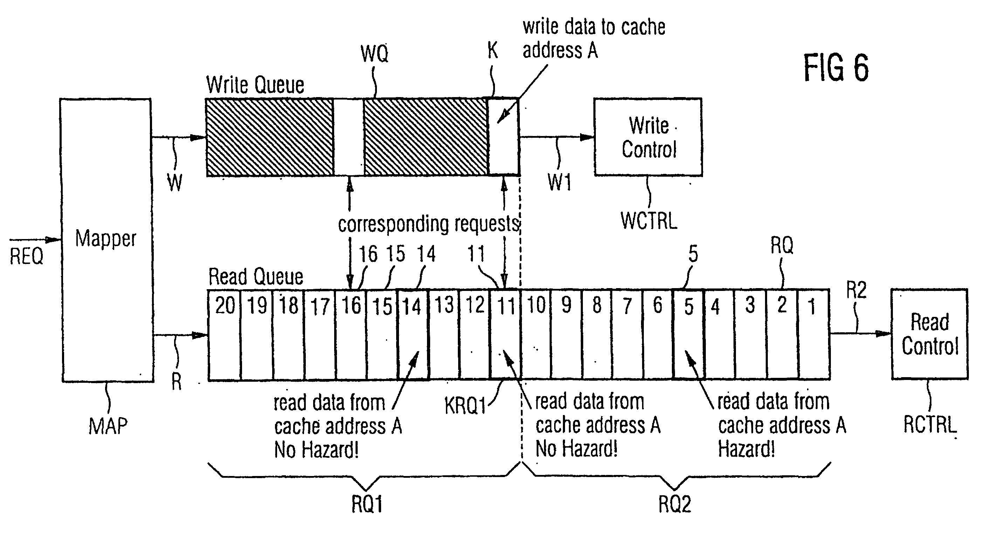

In Figur 6 ist zur Erläuterung der Wirkungsweise der Datenkonflikterkennungseinheit HDET ein Blockschaltbild mit der Zuordnungseinheit MAP, der Schreibwarteschlange WQ, der Lesewarteschlange RQ mit einem ersten Teil RQ1 und einem zweiten Teil RQ2, der Schreibsteuerung WC und der Lesesteuerung RC dargestellt. Die Zuordnungseinheit MAP bestimmt die Schreibund Leseaktionen, die auf Anforderung REQ folgen müssen. Das Nachladen aus den externen Speicher XMEM in das Speicherfeld CMEM dauert viel länger als die Ausgabe, da für das Speichern mehrere langsame Speichertakte und für die Verarbeitung nur ein schneller Verarbeitungstakt nötig ist und außerdem sich das Nachladen aus dem externen Speicher mit einer großen Latenzzeit von beispielsweise 10 Speichertakten behaftet. Da viele Leseanforderungen ohne Nachladen auskommen sollen, ist es vorteilhaft, mehrere Anforderungen in einer Pipeline zu verarbeiten. Die Zuordnungeinheit MAP gibt Schreibkommandos W und Lesekommandos R gleichzeitig aus, wenn zu einer Anforderung REQ ein Nachladen notwendig ist. Bevor also das Lesekommando R, für welches Daten nachzuladen sind, zu einem Ausgabezyklus verarbeitet wird, muß es solange verzögert werden, bis die Daten im Cache-Speicherfeld CMEM verfügbar sind. Da die Ausgabe vorteilhafterweise in der gleichen Reihenfolge erfolgen sollten wie sie angefordert werden, müssen sie eine Lesewarteschlange RQ (Queue) durchlaufen.

Auch die Schreibkommandos W sind vorteilhafterweise in der Schreibwarteschlange WQ zwischengespeichert, wenn schon eine Nachladeoperation bearbeitet, da sonst zwei aufeinanderfolgende Anforderungen, die ein Nachladen erfordern, die Pipeline unweigerlich zum Stillstand bringen würden. Bereits einige Speicherplätze in der Schreibwarteschlange ermöglichen eine wesentlich bessere Auslastung der Nachladebandbreite.

Wie in Figur 5 dargestellt können beim Nachladen von Daten in das Cache-Speicherfeld CMEM Datenkonflikte (Hazards) auftreten. Diese treten dann auf, wenn eine Nachladeoperation gestartet werden soll, die gültige Daten im Cache-Speicherfeld überschreiben würde, die noch für zuvor in der Zuordnungseinheit bereits erzeugte aber noch nicht ausgegebene Lesekommandos gebraucht werden. Die Lesekommandos sind zu diesem Zeitpunkt in der ersten Lesewartenschlange RQ gespeichert. Um so einen Datenkonflikt zu erkennen, ist nur der Inhalt des ersten Teils RQ1 der Lesewarteschlange RQ bei einer Nachladeoperation abzusuchen. Am Kopf K der Schreibwarteschlange WQ steht ein Nachladekommando, welches ein Datum in die Cache-Adresse A übertragen soll. Die Zelle 11 des ersten Teils RQ1 der Lesewarteschlange RQ enthält hier beispielsweise das hierzu korrespondierende Lesekommando, das heißt die beiden Einträge stammen aus der gleichen Anforderung und wurden gleichzeitig von der Zuordnungseinheit MAP in die Schreibwarteschlange WQ und in den ersten Teil RQ1 der Lesewarteschlange eingetragen. Folglich enthält die Zelle 11 der Lesewarteschlange ein Kommando, das aus der Cache-Adresse A liest. Die Zelle 5 des zweiten Teils RQ2 der Lesewarteschlange enthält ebenfalls einen Lesezugriff auf Adresse A und steht im Konflikt mit der anstehenden Nachladeoperation, weil die zugehörige Anforderung vor der Anforderung die das Kommando in der Zelle 11 initiierte, angelegt wurde und somit ein älteres Datum in der Cache-Adresse A erwartet. Um ein fehlerhaftes Verhalten zu vermeiden muß also der zweite Teil RQ2 der Lesewarteschlange RQ bis zur Zelle 5 abgearbeitet werden, ehe die Nachladeoperation gestartet werden darf. Lesekommandos auf Plätzen mit Nummern größer oder gleich 11, die aus Cache-Adresse A lesen werden, dürfen bei der Suche nicht berücksichtigt werden, da diese Operationen schon das nachzuladende Datum erwarten. Für die Suchfunktion die das vorzeitige Nachladen verhindert, muß somit die Lesewarteschlange RQ in zwei Teile RQ1 und RQ2 gespalten werden. Die Zuordnungseinheit übergibt die Kommandos zunächst in den ersten Teil RQ1 den sie durchlaufen, bis die korrespondierenden Schreibkommandos als Auftrag in die Schreibsteuerung WCTRL übergeben werden. Bei Start der Nachladeoperation werden die Lesekommandos an den zweiten Teil RQ2 der Lesewarteschlange übertragen. Die Konfliktsuche beschränkt sich auf den zweiten Teil RQ2 der Lesewarteschlange.

Zu beachten ist, daß dann, wenn eine Nachladeoperation gestartet wird und das korrespondierende Lesekommando zum zweiten Teil RQ2 überwechselt, die nächste Nachladeoperation erst gestartet werden kann, wenn das hierzu korrespondierende Lesekommando am Kopf KRQ1 des ersten Teils RQ1 der Lesewarteschlange steht, weil alle vorhergehenden Kommandos, die nicht mit einer Nachladeoperation verbunden sind, für die Konfliktsuche in dem zweiten Teil RQ2 der Lesewarteschlange stehen müssen. Im Fall von Figur 6 bedeutet das, daß nach dem Start der Nachladeoperation für Zelle 11, die Konfliktsuche bezüglich des Nachladens für Zelle 16 frühestens ausgeführt werden darf, wenn alle Lesekommandos der Nummern 15 und kleiner sich im zweiten Teil RQ2 befinden. Dies kann dann einige zusätzliche Wartezyklen und damit einen Performance-verlust bedeuten, wenn das Nachladen für Kommando 11 sehr schnell fertig ist und die Lesesteuerung RCTRL für ein Kommando in Zelle 16 bereits bereit wäre, während sich im ersten Teil der Lesewarteschlange noch Kommandos mit Zellennummern kleiner oder gleich 15 befinden. Dies passiert zum Beispiel dann, wenn die beiden Teile RQ1 und RQ2 in zwei getrennten Speichern realisiert werden und nur ein Kommando pro Takt von dem ersten Teil zum zweiten Teil wechseln kann.

Dieser Nachteil kann beispielsweise dadurch umgangen werden, daß beide Teile RQ1 und RQ2 sich in einem Speicher befinden und das Weiterrücken der Kommando innerhalb der Wartenschlange RQ1 anstatt durch Datentransport durch Inkrementieren von Schreib- und Lese-Pointern erfolgt. Hiermit kann der logische Übergang eines ganzen Satzes von Kommandos in einem Takt erfolgen. Bei dieser Realisierungsart ist es vorteilhaft, neben einem Anfangszeiger (Headpointer) und einem Endezeiger (Tailpointer) auch einen Mittenzeiger vorzusehen, der die Trennung zwischen dem ersten Teil RQ1 und dem zweiten Teil RQ2 markiert.

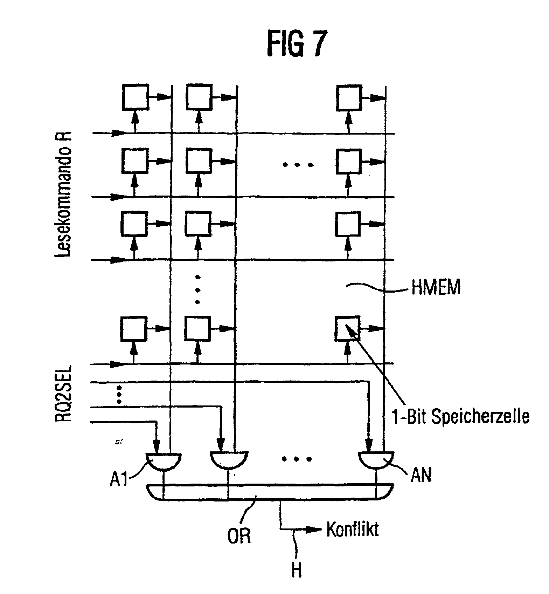

Für jedes Laden einer Cache-Zeile ist zu prüfen, ob in diesem Warteschlangenbereich ein Kommando vorhanden ist, das aus der gleichen Zeile liest. Diese Überprüfung kann besonders einfach mit einer in Figur 7 gezeigten Anordnung realisiert werden. RQ1 und RQ2 werden hierbei durch ein Speicherfeld HMEM implementiert, dessen Spaltenzahl der Anzahl der Einträge von RQ1 und RQ2 und dessen Zeilenzahl- der Anzahl der Cachezeilen entspricht. Beim Eintragen eines Lesekommandos in RQ1 wird ein Datenwort in die durch den Schreibzeiger bestimmten Spalte geschrieben. Jedes Bit dieses Wortes spiegelt den Lesestatus der korrespondierenden Cachezeile wieder, wobei hier z. B. eine 1 Lesen und eine 0 nicht Lesen bedeuten. Da durch ein Kommando mehrere Cachezeilen gelesen werden können, können mehrere Bits einer Spalte hierbei gesetzt werden. Somit repräsentiert eine Zeile des Speicherfeldes HMEM den Status einer Cachezeile für die komplette Lesewarteschlange RQ1 und RQ2.

Bevor eine Cachezeile überschrieben wird, wird eine Zeile aus dem Speicherfeld HMEM ausgelesen. Jedes ausgelesene Bit wird jeweils mit einem Auswahl-Bit aus einem Auswahlsignal RQ2SEL in einem jeweiligen UND-Gatter A1 ... An verknüpft und über ein ODER-Gatter OR zu dem Konflikt-Signal H zusammengefaßt. Die Auswahlbits markieren durch 1-Pegel an den passenden Positionen die Spalten, welche zu dem Lesewarteschlangenbereich RQ2 gehören.

Die Schreibsteuerung WCTRL setzt die Schreibkommandos WC in passende Ansteuerzyklen für das Cache-Speicherfeld und den externen Speicher um. Das Schreibkommando WC kann das Nachladen von mehreren Cache-Zeilen bewirken. Das Nachladen jeder Cache-Zeile erfordert eine enge Zusammenarbeit mit der Datenkonflikterkennungseinheit HDET. Das Umsetzen eines Kommandos dauert in der Regel mehrere Taktzyklen.

Die Lesesteuerung RCTRL setzt die Lesekommandos aus der Lesewarteschlange RQ in Steuersignale für das Cache-Speicherfeld um. Der Durchsatz hierbei beträgt in der Regel ein Kommando und eine Ausgabe pro Takt. Wenn ein Lesebefehl mit einer Nachladeoperation verbunden ist, werden gegebenenfalls Wartezyklen eingeführt, bis die Nachladeoperation vollzogen ist. Da mit jeder Ausgabe mehrere Pixel ausgelesen werden, gibt es eine Vielzahl von Formaten für die die Darstellung der Pixel am Cache-Ausgang DO. Außer der Aktivierung der passenden Cache-Zeilen hat also die Lesesteuerung die Aufgabe, die passenden Schaltpunkte S des Kreuzschienenverteilers anzusteuern.

## Patentansprüche

1. Cache-Speicher mit einem Speicherfeld (CMEM),
- bei dem Eingangsdaten (DI) in das Speicherfeld einlesbar und Ausgangsdaten (DO) aus dem Speicherfeld auslesbar sind,
- bei dem eine Zuordnungseinheit (MAP) vorhanden ist, die Bereiche (W1, W2) innerhalb eines zweidimensionalen Datenfeldes (IM) Datenblöcken des Speicherfeldes flexibel zuordnet und hierzu in der aus einem Anforderungssignal (REQ) ein Schreibkommando (W) für eine Schreibwarteschlange (WQ) und ein Lesekommando (R) für eine Lesewarteschlange (RQ) bildbar sind,
- bei dem eine Datenkonflikterkennungseinheit (HDET) vorhanden ist, die verhindert, daß ein Schreibsteuersignal (WC) einen Schreibvorgang startet, bevor alle Lesekommandos aus der Lesewarteschlange (RQ) verarbeitet sind, deren zugehörige Daten im Speicherfeld (CMEM) bereits geladen sind aber noch nicht überschrieben werden dürfen, weil sie noch nicht aus dem Speicherfeld ausgelesen sind, und hierzu in der aus den durch die Schreibwarteschlange (WQ) verzögerten Schreibkommandos (W') und aus Adressen (HS) aus der Lesewarteschlange ein Konfliktsignal (H) bildbar ist,
- bei dem eine Schreibsteuerung (WCTRL) vorhanden ist, in der aus dem verzögerten Schreibkommando (W') und dem Konfliktsignal (H) das Schreibsteuersignal (WC) für das Speicherfeld und ein Synchronisiersignal (SYNC) bildbar sind,
- bei dem eine Lesesteuerung (RCTRL) vorhanden ist, in der aus einem durch die Lesewarteschlange verzögerten Lesesignal (R2) und dem Synchronisiersignal (SYNC) ein Lesesteuersignal (RC) für das Speicherfeld bildbar ist, wobei das Synchronisiersignal dafür sorgt, daß das Lesesteuersignal (RC) erst dann erzeugt wird, wenn die benötigten Daten bereits im Speicherfeld vorhanden sind,
- bei dem das Speicherfeld (CMEM) Speicherzellen (Z) mit zwei getrennten Leseports (RD1 und RD2) und einem Schreibport (WR) aufweist,
- bei dem der erste Leseport mit einer von mehreren vertikalen Leseleitungen (VL) und der zweite Leseport mit einer von mehreren horizontalen Leseleitungen (HL bzw. HL') verbunden ist,
- bei dem das Speicherfeld in zwei getrennte Blöcke (BO und B1) aufgeteilt ist, wobei die horizontalen Leseieitungen der beiden Blöcke von einander getrennt sind,
- bei dem die vertikalen Leseleitungen über einen Kreuzschienenverteiler den Ausgängen für die Ausgangsdaten (DO) frei zuordenbar sind und
- bei dem in jedem Block diagonal verteilte Schalter (SD) zwischen den vertikalen Leseleitungen (VL) und den horizontalen Leseleitungen (HL bzw. HL') derart vorgesehen sind, daß die horizontalen Leseleitungen über die vertikalen Leseleitungen mit dem Kreuzschienenverteiler so verbindbar sind, daß beliebig verschiebare Datenfeldausschnitte mit einem einzigen Zugriff auslesbar sind.

2. Cache-Speicher nach Anspruch 1,
- bei der die Zuordnungseinheit (MAP) aus einer Anforderung (REQ) Schreib- und Lesekommandos (W,R) zur Ansteuerung eines Speicherfeldes bildet, wobei eine jeweilige Anforderung eine Position, ein Format und eine Nummer eines angeforderten Bereichs eines zweidimensionalen Datenfeldes enthält, bei der die Zuordnungseinheit (MAP) überprüft, ob alle Daten des angeforderten Bereichs schon im Speicherfeld (CMEM) gespeichert sind,
- bei der die Zuordnungseinheit voneinander getrennte Datenbereiche aufweist, die über einen Beschreibungsteil (SD) verfügen, der eine Beschreibung des zweidimensionalen Datenfeldes enthält und der über die Anforderung initialisierbar ist,
- bei der die getrennten Datenbereiche jeweils zwei Blockeinträge (BEO und BE1) für mindestens zwei Cache-Speicherblöcke (CS1 und CS2) im Speicherfeld (CMEM) aufweisen und
- bei der ein jeweiliger Blockeintrag eine Startspalte (mBC) und eine Startreihe (mBR) eines jeweiligen Bereiches (W1) im zweidimensionalen Datenfeld, eine Startreihe (CBR) im Cache-Speicherblock (CS1, CS2) und die Anzahl (CR) der Zeilen des jeweiligen Cache-Speicherblocks sowie eine Merkzelle (RF), die angibt, ob der Cache-Speicherblock überhaupt gültige Zeilen enthält, aufweist.

## Claims

1. Cache memory having a memory array (CMEM),
- in which input data (DI) can be read into the memory array and output data (DO) can be read out of the memory array,
- in which a mapper (MAP) is present which flexibly allocates sections (W1, W2) within a two-dimensional data field (IM) to data blocks in the memory array and, to this end, in which mapper a write command (W) for a write queue (WQ) and a read command (R) for a read queue (RQ) can be formed from a request signal (REQ),
- in which a hazard detection unit (HDET) is present which prevents a write control signal (WC) from starting a write operation before all the read commands from the read queue (RQ) have been processed whose associated data has already been loaded in the memory array (CMEM) but must not be overwritten yet because it has not been read from the memory array yet and, to this end, in which hazard detection unit a hazard signal (H) can be formed from the write commands (W') delayed by the write queue (WQ) and from addresses (HS) from the read queue,
- in which a write controller (WCTRL) is present in which the delayed write command (W') and the hazard signal (H) can be used to form the write control signal (WC) for the memory array and a synchronization signal (SYNC),
- in which a read controller (RCTRL) is present in which a read signal (R2) delayed by the read queue and the synchronization signal (SYNC) can be used to form a read control signal (RC) for the memory array, the synchronization signal ensuring that the read control signal (RC) is not generated until the required data is already present in the memory array,
- in which the memory array (CMEM) has memory cells (Z) having two separate read ports (RD1 and RD2) and a write port (WR),
- in which the first read port is connected to one of a plurality of vertical read lines (VL) and the second read port is connected to one of a plurality of horizontal read lines (HL and HL'),
- in which the memory array is split into two separate blocks (BO and B1), the horizontal read lines in the two blocks being isolated from one another,
- in which the vertical read lines can be freely allocated to the outputs for the output data (DO) by means of a crossbar switch, and
- in which each block contains diagonally distributed switches (SD) between the vertical read lines (VL) and the horizontal read lines (HL and HL') such that the horizontal read lines can be connected to the crossbar switch via the vertical read lines such that a single access operation can be used to read out any desired shiftable data field portions.

2. Cache memory according to Claim 1,
- in which the mapper (MAP) uses a request (REQ) to form write commands and read commands (W, R) for actuating a memory array, a respective request containing a position, a format and a number for a requested section of a two-dimensional data field,
- in which the mapper (MAP) checks whether all the data in the requested section is already stored in the memory array (CMEM),
- in which the mapper has mutually isolated data sections which have a portion description (SD) which contains a description of the two-dimensional data field and which can be initialized by means of the request,
- in which the isolated data sections each have two block entries (BEO and BE1) for at least two cache memory blocks (CS1 and CS2) in the memory array (CMEM), and
- in which a respective block entry contains a beginning column (mBC) and a beginning row (mBR) in a respective section (W1) in the two-dimensional data field, a beginning row (CBR) in the cache memory block (CS1, CS2) and the number (CR) of rows in the respective cache memory block and also a resident flag (RF) which indicates whether the cache memory block actually contains valid rows.

## Revendications

1. Antémémoire pourvue d'un champ de mémoire (CMEM),
- dans laquelle des données d'entrée (DI) peuvent être saisies dans le champ de mémoire et des données de sortie (DO) peuvent être extraites de la zone de mémoire,
- dans laquelle il y a une unité d'affectation (MAP), qui affecte de manière flexible des zones (W1, W2) à l'intérieur d'un champ de données bidimensionnel (IM) à des blocs de données du champ de mémoire et, à cet effet, dans laquelle peuvent être formées, à partir d'un signal de demande (REQ), une instruction d'écriture (W) pour une file d'attente d'écriture (WQ) et une instruction de lecture (R) pour une file d'attente de lecture (RQ),
- dans laquelle il y a une unité d'identification de conflit de données (FLET) qui empêche qu'un signal de commande d'écriture (WC) lance une opération d'écriture avant que toutes les instructions de lecture de la file d'attente de lecture (RQ) n'aient été traitées, dont les données correspondantes ont déjà été chargées dans le champs de mémoire (CMEM), mais ne peuvent encore être écrasées, parce qu'elles n'ont pas encore été extraites du champ de mémoire, et, à cet effet, dans laquelle peut être formé un signal de conflit (H) à partir des instructions d'écriture (W') différées par la file d'attente d'écriture (WQ) et à partir d'adresses (HS) de la file d'attente de lecture,
- dans laquelle il y a une commande d'écriture (WCTRL) dans laquelle peuvent être formés, à partir de l'instruction d'écriture différée (W') et du signal de conflit (H), le signal de commande d'écriture (WC) pour la zone de mémoire et un signal de synchronisation (SYNC),
- dans laquelle il y a une commande de lecture (RCTRL) dans laquelle peut être formé, à partir d'un signal de lecture (R2) différé par la file d'attente de lecture et du signal de synchronisation (SYNC), un signal de commande de lecture (RC) pour la zone de mémoire, le signal de synchronisation veillant à ce que le signal de commande de lecture (RC) ne soit produit que lorsque les données nécessaires sont déjà présentes dans le champ de mémoire,
- dans laquelle le champ de mémoire (CMEM) présente des cellules de mémoire (Z) avec deux ports de lecture séparés (RD1 et RD2) et un port d'écriture (WR),
- dans laquelle le premier port de lecture est connecté à une de plusieurs lignes de lecture verticales (VL) et le second port de lecture est connecté à une de plusieurs lignes de lecture horizontales (HL ou HL'),
- dans laquelle le champ de mémoire est divisé en deux blocs séparés (B0 et B1), les lignes de lectures horizontales des deux blocs étant séparées les unes des autres,
- dans laquelle les lignes de lecture verticales peuvent être librement affectées aux sorties des données de sortie (DO) via un répartiteur à barres croisées, et
- dans laquelle il est prévu dans chaque bloc des commutateurs (SD) répartis en diagonale entre les lignes de lecture verticales (VL) et les lignes de lecture horizontales (HL ou HL') de sorte que les lignes de lecture horizontales puissent être connectées au répartiteur à barres croisées via les lignes de lecture verticales de sorte que des secteurs du champ de données décalables de manière quelconque puissent extraits avec un seul accès.

2. Antémémoire selon la revendication 1,
- dans laquelle l'unité d'affectation (MAP) forme, à partir d'une demande (REQ), des instructions d'écriture et de lecture (W, R) pour commander une zone de mémoire, une demande respective contenant une position, un format et un numéro d'une zone demandée d'un champ de données bidimensionnel, l'unité d'affectation (MAP) vérifiant si toutes les données de la zone demandée ont déjà été mémorisées dans le champ de mémoire (CMEM),
- dans laquelle l'unité d'affectation présente des zones de données séparées les unes des autres, qui disposent d'une partie descriptive (SD), qui contient une description du champ de données bidimensionnel et qui peut être initialisée via la demande,
- dans laquelle les zones de données séparées présentent respectivement deux enregistrements de blocs (BE0 et BE1) pour au moins deux blocs d'antémémoire (CS1 et CS2) dans le champ de mémoire (CMEM), et
- dans laquelle un enregistrement de bloc respectif présente une colonne de départ (mBC) et une rangée de départ (mBR) d'une zone respective (W1) dans le champ de données bidimendionnel, une rangée de départ (CBR) dans le bloc d'antémémoire (CS1, CS2) et le nombre (CR) des rangées du bloc d'antémémoire respectif ainsi qu'une cellule indicatrice (RF) qui indique si le bloc d'antémémoire contient des rangées généralement valables.
